Europäisches Patentamt

European Patent Office

Office européen des brevets

(19)

(11) **EP 1 376 896 A1**

(12) **EUROPEAN PATENT APPLICATION**

(43) Date of publication:
**02.01.2004 Bulletin 2004/01**

(51) Int Cl.⁷: $H04B\ 7/08$, $H04L\ 25/02$

(21) Application number: **02360186.7**

(22) Date of filing: **20.06.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Evolium S.A.S.**
**75008 Paris (FR)**

(72) Inventor: **Braun, Volker**
**70178 Stuttgart (DE)**

(74) Representative: **KOHLER SCHMID + PARTNER**
**Patentanwälte GbR,**
**Ruppmannstrasse 27**
**70565 Stuttgart (DE)**

(54) **Iterative channel estimation for receiving wireless transmissions using multiple antennas**

(57)    A method of processing radio signals received via multiple antennas in a radio receiver having at least one of the following: at least two antennas, each antenna delivering in use an antenna signal; at least two elements of an antenna array, each antenna element delivering an antenna signal; at least two antenna arrays each having a plurality of antenna elements, each antenna array delivering an antenna signal;

the antenna signals being combined to deliver a combined signal,

wherein for each antenna signal an iterative channel estimation is performed to control the combining process of the antenna signals.

Advantages of the invention are improvement of error rate performance of multiple antenna radio receivers, because the antenna gain can be enhanced due to reducing the combining losses.

Fig. 1

**Description**

The invention concerns a method of processing radio signals received via multiple antennas in a radio receiver having at least two antennas, or at least two elements of an antenna array, the antenna signals being combined by a spatial or a spatio-temporal combiner. The invention also concerns a receiver with multiple antennas and a mobile communications system comprising such receiver.

**1. Introduction**

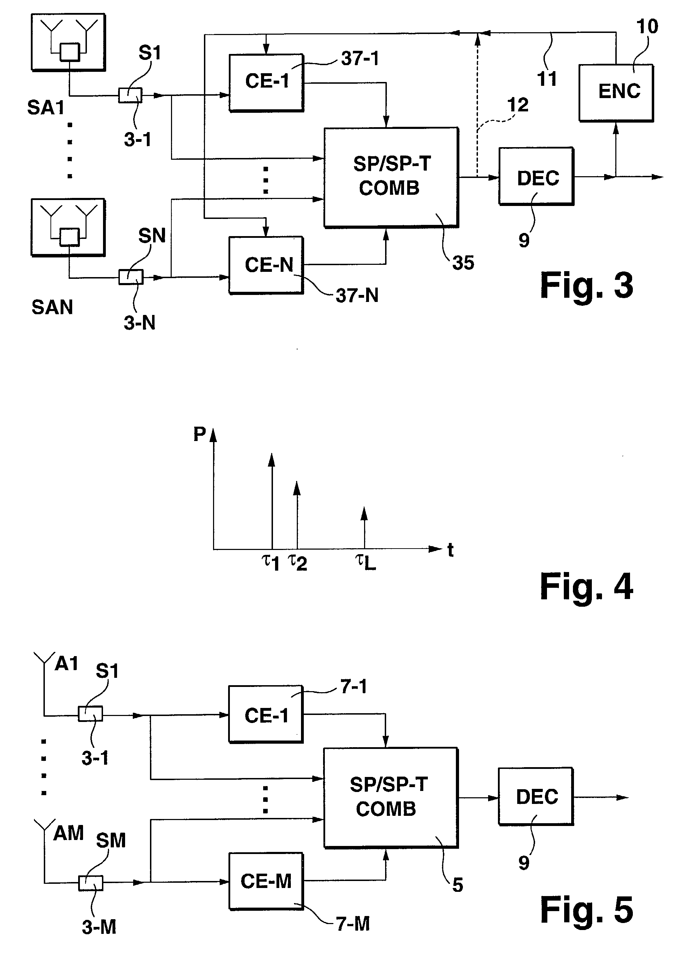

Multiple receive antennas are often used in radio communications systems to improve the link quality, i.e., for error rate reduction given a certain transmit power, or alternatively for transmit power reduction given a certain target error rate. Multiple receive antennas include antenna arrays, e.g. linear or circular arrays, where adjacent antenna elements are separated by typically half a radio wavelength, or diversity constellations, where the antennas are spaced further apart, say ten radio wavelengths or more. Alternative antenna arrangements combine the above, e.g., by using a number of sub-arrays used in a diversity configuration. We focus on linear-polarized antennas, but cross-polarized multiple antenna configurations are possible, too.
In a receiver using M antennas (M > 1), the M received signals have to be combined to obtain a single signal by means of appropriate techniques, often by digital signal processing techniques. Adequate combining techniques have to be adapted to the respective transmit format (e.g. TDMA (time division multiple access) or CDMA (code division multiple access)) and to the respective antenna constellation. In general, the combining stage can be called a spatial combining stage or a spatio-temporal combining stage, as explained below. Aim of this spatial or spatio-temporal combining unit is to add the received signal components coherently (in-phase) to optimize the error rate performance.
Time-dispersion is a typical characteristic of a radio propagation channel. It can be caused by bandlimiting filters, which in TDMA systems (e.g. global system for mobile communication (GSM) or general packet radio service (GPRS)) typically results in intersymbol interference. Another dispersive effect typically encountered in mobile radio communications is multipath propagation. It results in received power-delay profiles as indicated in Fig. 4, which shows the received power in the vertical axis and the path delays in the horizontal axis. The impulse response of a multipath propagation channel can be written as

$$\sum_{l=1}^{L} \alpha_l \delta(t - \tau_l),$$

where L denotes the number of multipath components and $\delta(t)$ denotes a Dirac impulse. Each signal path is characterized by a complex-valued amplitude $\alpha_l$ and by a path delay $\tau_l$. A property of W-CDMA (wideband CDMA) is that the receiver can resolve the multipath profile and perform a channel estimation for every received path. In this case, often a Rake receiver is applied that performs a temporal combinina of the fingers (i.e. multipath components) according to

$$\sum_{l=1}^{L} \alpha_l^* r(t + \tau_l), \qquad\qquad (1)$$

where $r(t)$ denotes the received signal (single antenna 1Rx receiver with $M$ = 1 assumed), and the weight coefficients are given by the conjugate complex channel estimates. Note that a channel estimate $\alpha_l$ is computed for every finger. Channel estimation is often carried out with the assistance of dedicated pilot or training symbols. Pilot symbols provide a phase reference to enable coherent detection. Often, a simple cross-correlation technique is used, either on a slot-by-slot basis, or by averaging over multiple slots. Note that in this document, the term "channel estimation" will always denote pilot symbol-assisted channel estimation if not stated otherwise.
Spatial combining refers to a combining operation that is performed in the spatial domain, e.g. by a weighted addition of the M received signals by using M complex-valued weight coefficients, denoted by $w_m$. Let $r_m(t)$ denote the received signals and $r(t)$ the output signal of the combining block. Spatial combining can then be written as

$$r(t) = \sum_{m=1}^{M} w_m r_m(t).$$

$$(2)$$

In the case of spatial combining, the obtained signal $r(t)$ can be processed in the same way as in a 1Rx receiver (i.e. a receiver having a single receive antenna). Applications of spatial combining include, for example, TDMA systems such as GSM and its extension systems.

Spatio-temporal combining refers to a combining operation that is performed in both the spatial and the temporal domain. Applications of spatio-temporal combining include, for example, W-CDMA systems such as UTRA/FDD (i.e. the frequency division duplex (FDD) variant of the universal terrestrial radio access (UTRA) system). In this case, spatio-temporal combining can be written as

$$r(t) = \sum_{m=1}^{M} \sum_{l=1}^{L} w_{m,l} r_m(t + \tau_l).$$

$$(3)$$

A set of ML weight coefficients, denoted by $W_{m,l}$, is used. The output signal $r(t)$ can subsequently be fed towards the error correction decoder (which is meant here to possibly include de-multiplexing functionality such as de-interleaving or rate de-matching).

Often, the weight coefficients used for spatial or spatio-temporal combining are based on channel estimates. In the case of spatial combining, a channel estimate is computed for every antenna. In the case of spatio-temporal combining for W-CDMA, a channel estimate is computed for every antenna and for every finger. A number of different combining techniques can be distinguished, depending on how to compute the weight coefficients:

- Maximum ratio combining (MRC) is an optimum (diversity) combining technique in the presence of AWGN (additive white Gaussian noise). It uses the conjugate complex channel estimates as the weight coefficients. Note that MRC uses both amplitude and phase information of the channel estimates. It is typically used with an antenna diversity constellation, where the amplitudes of the received signals differ between antennas.

- Equal gain combining assumes that all weight coefficients for antenna combining have the same amplitude, so only phase information is used for combining. The phase information can be obtained from the channel estimates in the same way as for MRC. This technique is often used with antenna arrays, where the physical structure ensures equal amplitudes of the received signals.

- The above techniques are optimum in the presence of AWGN as additive channel impairment, MRC with diversity constellations, and equal gain combining with antenna arrays. Often the received signal suffers from co-channel interference, both in TDMA and CDMA. Antenna combining techniques for interference suppression include Optimum Combining or MMSE (minimum mean square error) combining. Such techniques are implemented by using the same channel estimation based coefficients as with the above techniques. In addition, these coefficients are multiplied with other measured parameters. Essential, however, is that the computation of the weight coefficients is assisted by channel estimation.

A generic block diagram of a multiple antenna receiver according to the state of the art is shown in Fig. 5. For every antenna, there is a channel estimation unit. The channel estimates are fed into the spatial or spatio-temporal combining unit. The combining unit performs a weighted addition of the received signals, assisted by the channel estimates, or assisted at least by the phase information obtained from the channel estimates. The output of the combining unit is fed into the error correction decoder. In particular, Fig. 5 shows the following functional blocks: Storage units 3-1 to 3-M (S1 toSM) for storing antenna signals. The outputs of the storage units are coupled to inputs of a combiner 5, which is indicated as a "SP/SP-T COMB" which means that according to the requirements this combiner is a spatial ("SP") combiner or a spatio-temporal ("SP-T") combiner. (Typical applications for spatial or spatio-temporal combining were exemplified above.) Besides combining a plurality of signals, the function of the combiner also includes demodulation functions, e.g. equalisation as typical in TDMA or Rake combining as typical in CDMA (see below for further explanations). The output signal of the combiner 5 is decoded by a decoder (DEC) 9. The decoder possibly also includes de-multiplexing functions such as de-interleaving or rate de-matching (see below for further explanations).

The input signals to the combiner 5 are also fed each to a respective channel estimator 7-1 to 7-M (CE-1 to CE-M) which deliver a channel estimate normally based on the presence of known signals in the antenna signals. The channel estimators deliver each a controlling signal to a respective input of the combiner 5. In this paper it is assumed that not analog signals but digital signals are processed. Therefore, one should consider, that the analog antenna signals (before or after a possible frequency shift and demodulation) are digitised. This is not shown in the drawings and not described, since this is well known to the expert.

The building blocks used in Fig. 5 have to be adapted to the respective transmission format, as briefly exemplified:

- TDMA: Significant amounts of intersymbol interference (ISI) are often characteristic in TDMA systems, e.g., GSM and its extensions. Often an equalizer is used to eliminate ISI prior to the decoding. In generic form, this equalizer would be integrated into the combining unit in Fig. 5. Further, there is often time-interleaving applied. In generic form, the de-interleaving functionality would be integrated into the decoder unit in Fig. 5.
- W-CDMA: In W-CDMA, e.g. in UTRA/FDD, the combining unit is often realized by means of a spatio-temporal Rake receiver, as defined in equation (3). UTRA/FDD further uses rate matching and time-interleaving. In generic form, the respective receiver building blocks for rate de-matching and de-interleaving would be integrated into the decoding unit in Fig. 5.

From these examples, we would define the output of the combining unit as a sequence of soft symbols suitable for error correction decoding, i.e., free of ISI and other radio propagation effects. In other words, the combining unit contains all demodulation functions. De-multiplexing functions such as de-interleaving or rate de-matching are handled within the decoder unit.

## 2. Proposed Receiver Structure

Accurate channel estimation is a key requirement to optimize the performance of the coherent combining unit. In the presence of AWGN, the use of an antenna array with M elements theoretically results in an improvement in uncoded bit error rate performance by 10 log $M$ dB. This gain is called the antenna gain. The gain observed in practice is often significantly lower than the theoretical antenna gain. We define the combining loss as the difference of the theoretical 10 log $M$ $dB$ antenna gain minus the gain achieved in practice. In computer simulations [1] with AWGN and MRC in the UTRA/FDD uplink, we observed a combining loss in the order of 1.5-2.0 dB with a four element linear array. In absolute dB terms, the combining loss tends to increase with increasing number of receive antennas and with decreasing signal-to-noise ratio. In our computer simulations, we assumed that channel estimation is carried out in a conventional (non-iterative) way using the dedicated pilot symbols (on a slot-by-slot basis).

It is an object of the invention to improve the reception of radio signals in mobile communication systems.

According to the characterising part of claim 1, this object is attained in that for each antenna path an iterative channel estimation is performed to control the combining process of the received signals.

Iterative channel estimation [2] is an advanced technique for improving channel estimation accuracy. In the public literature, it is described for application with a single receive antenna. The basic idea of iterative channel estimation is to perform the conventional decoding operation twice, where the intermediate error-corrected output is re-encoded to obtain an extended training seqence. Due to the enlarged data base used for updating the channel estimates, these will now have better accuracy and therefore indirectly result in better error rate performance. The resulting gains observed with single receive antennas can be significant, for example, about 1-1.5 dB in GPRS [2].

We propose to combine the iterative channel estimation technique with multiple antenna reception such that the combining of the antenna signals is performed repeatedly (at least twice), thereby using the previously updated channel estimates.

Advantages of the invention are improvement of error rate performance of multiple antenna radio receivers, because the antenna gain can be enhanced due to reducing the combining losses.

According to embodiments of the invention, a feedback information from a point immediately after the combiner ("short" loop) or after a decoding unit is looped back for being processed in the channel estimation units. An advantage is an enhanced channel estimation because of a longer training sequence. A "short" loop (looping back starting immediately after the combiner) may be performed in a simpler way and may be advantageous, though a reduced error rate performance is to be expected compared with a long loop (starting after the decoder). For other embodiments of the invention, also for receivers and systems according to the invention, similar advantages may apply.

Further features and advantages of the invention will be apparent from the following description of preferred variants and embodiments of the invention in connection with the drawings which show features essential for the invention, and in connection with the claims. The individual features may be realised individually or in any combination in an embodiment of the invention.

In the drawings:

Fig. 1 is a generic block diagram of a multiple antenna receiver based on iterative combining.

Fig. 2 is a multiple antenna receiver based on iterative combining adapted to the UTRA/FDD uplink.

Fig. 3 is an application of iterative combing in conjunction with N antenna sub-arrays.

Fig. 4 shows a typical power profile observed at the output of a multipath channel.

Fig. 5 shows a generic block diagram of a conventional multiple antenna receiver.

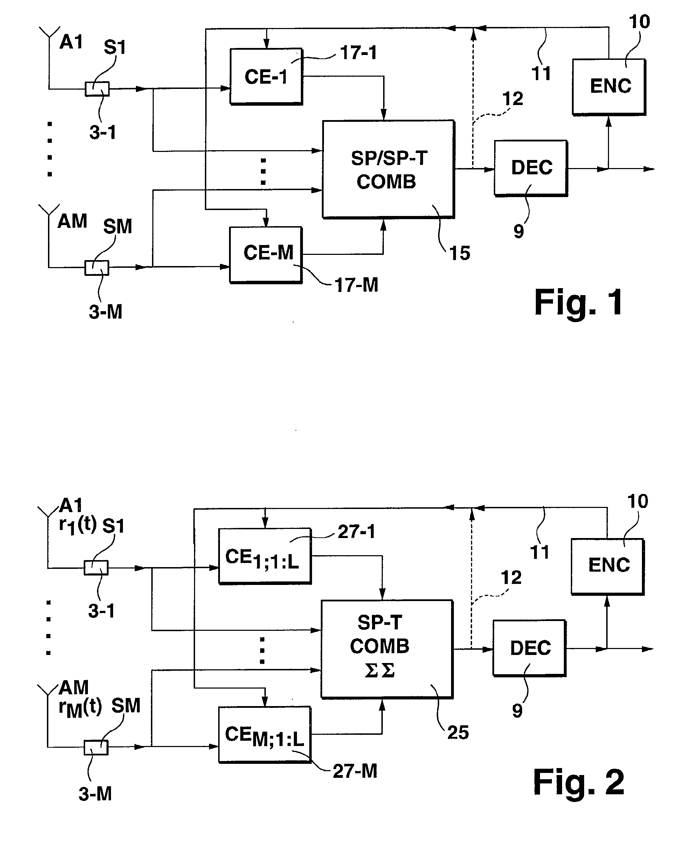

A generic block diagram of a multiple antenna receiver using the iterative combining technique is shown in Fig. 1.

Components similar to those shown in Fig. 5 are designated with similar terms. The channel estimators 17-1 to 17-M are arranged to receive and evaluate a feedback signal fed back from a point after the combiner 15. In one case the feedback signal is fed back from a point after the decoder 9, in which case the decoding process must be reversed by re-encoding in a unit 10 (ENC). This feedback path is indicated by reference numeral 11. In an other case the feedback path 12 starts immediately from the output of the combiner; no re-encoding is needed. In the two cases, the signal to be fed back is processed in an appropriate manner, if wanted, e.g. quantised. The feedback signal is input to controlling inputs of all of the channel estimators and controls them such that they deliver a better quality of the channel estimate than without the feedback signal. Also Fig. 1 shows two different embodiments at the same time: one having a spatial combiner (SP COMB), and another having a spatio-temporal combiner (SP-T COMB).

As before, there is a channel estimation unit for every antenna. The channel estimates are fed into the spatial or spatio-temporal combining unit. The combining unit performs a weighted addition of the received signals, assisted by the channel estimates, or assisted at least by the phase information obtained from the channel estimates. The output of the combining unit is fed into the error correction decoder (DEC) 9. The "first iteration" (n = 1) (more exactely: a first step; nothing will be repeatedly be executed and no feedback signal is used in this step) is now completed, and the "second iteration" (n = 2) (or the second step, where in fact the feedback signal is used the first time) will follow. The error corrected output is re-encoded to obtain an 'extended training sequence' (path 11). This extended training sequence offers a larger data base than a conventional training or pilot sequence, and it can thus provide more accurate channel estimates. Note that for updating the channel estimates using the extended training sequence, a different algorithm can be used than for computing the initial channel estimates. Further note that the re-encoding unit can possibly include functions for rate-matching or interleaving, depending on the transmit format. Using the extended training sequence, the channel estimates are updated, thereby possibly using a different channel estimation algorithm than for the initial values. Spatial or spatio-temporal combining is repeated, this time assisted by the channel estimation updates, and finally the output of the combining unit is decoded. The number of iterations performed must be at least n = 2, but it may be larger. In the latter case, the feedback path in Fig. 1 is carried out more than once.

In a reduced complexity implementation of the iterative combining scheme, the extended training sequence can be obtained directly from the output of the combining unit (dashed in Fig. 1, path 12, thus avoiding the decoding and re-encoding operations in the first iteration. Compared with the above described full-complexity solution, this technique will likely be less advantageous in terms of error rate performance. But, as the antenna gain is exploited to obtain the extended training sequence, the performance degradation versus the full complexity solution may be moderate.

In general, we expect that the iterative combining technique will compensate for a large share of the combining loss observed in our computer simulations. In addition, it will also improve the absolute reference performance given by the single antenna receiver. In the UTRA/FDD uplink we may thus expect a total gain of about 1.5-2.5 dB when using a four element antenna array (where we assume about 0.5-1 dB improvement in reference performance plus about 1-1.5 dB reduction in combining loss).

In general, the iterative combining technique can be used with any radio transmission format, e.g. TDMA, CDMA, TDMA-CDMA combinations (such as TD-CDMA(time division CDMA) or synchronous TD-CDMA (TD-SCDMA)), or OFDM (orthogonal frequency division multiplexing). It can be applied with any multiple antenna constellation, e.g. diversity constellations (where the antenna elements are typically spaced a few meters apart) or with antenna arrays (e.g. linear or circular arrays). Further it can be used with pure spatial combining techniques (e.g. in TDMA) or with spatio-temporal combining (e.g. using a spatio-temporal Rake receiver in CDMA), and with a variety of combing algorithms such as Equal Gain Combining (as often used with antenna arrays), Maximum Ratio Combining (often used with antenna diversity constellations), or Optimum Combining (for interference suppression with either antenna arrays or diversity constellations).

As a particularity of the invention, the combining technique must utilize information derived from the channel estimates, at least the phase information for enabling coherent combining. Additionally, the combining can utilize the amplitude information of the channel estimates, for example, to implement maximum ratio combining or optimum combining.

As a worked-out example for the UTRA/FDD uplink, Fig. 2 depicts the block diagram of a multiple antenna receiver based on the iterative combining technique when applied in the UTRA/FDD uplink.

In Fig. 2, the combiner 25 is a spatio-temporal combiner performing the combination over all "fingers" (= signals arriving at different times) 1 to L of all antenna signals which in this example are signals of individual antennas but can be in other embodiments of the invention signals of a plurality of antenna arrays. Each channel estimator symbol 27-1 to 27-M in Fig. 2 is to be understood as a plurality of estimators (for the channel estimator 27-1: channel estimators CE1;1, CE1;2, CE1;3, ... CE1;L), L being the number of fingers. Thus, M times L channel estimators are present, either as real devices, or as implementation in a calculation process. The combiner 25 receives the output signals of all the channel estimators as control signals.

In Fig. 2, we assume a combining unit implementing a spatio-temporal Rake receiver as defined in (3), where the weight coefficient for the mth antenna and the /th finger is denoted by $W_{m,l}$. With MRC, the weights are given by $W_{m,l} = \alpha^*_{m,l,}$ where $\alpha_{m,l}$ denotes the channel estimate for the mth antenna and the /th finger.

In the UTRA/FDD uplink, we envision this technique as an alternative or add-on to multiuser detection (MUD).

We would like to discuss a few implementation aspects. In general, the implementation aspects aim at reducing the computational complexity without leading to significant losses in error rate performance.

- As discussed above, the combining unit contains all the demodulation functionality such as equalization or Rake combining. Other demodulation techniques that could be included in the combining unit are e.g. multi-user receiver structures (e.g. in W-CDMA or TD-SCDMA). In order to reduce the computational complexity of the combining unit, the demodulation operation can be implemented with reduced complexity, particularly in the first iteration. As an example, use a low-complexity equalizer (or multi-user detection) algorithm in the first iteration and use a more complex algorithm in the second iteration.

- Error correction coding can be realized, for example, by means of block codes, convolutional codes, or concatenated codes such as Turbo codes. To reduce computational complexity of the iterative combining scheme, decoding in the first iteration could be realized with reduced complexity. As an example, Turbo decoding in the first iteration could be confined to one or two iterations, where typically about eight iterations would be required to achieve de-facto optimum performance.

Other implementation aspects are similar to those known from the conventional iterative channel estimation technique [2]. As an example, the extended training sequence can be split into parts, to improve receiver performance for rapidly moving transmit stations (or multiple antenna receiver stations) or to enable the time slot sharing by several users [2].

We briefly mention a few other applications of the proposed technique:

- Until now, we assumed that multiple receive antennas are used within a single cell or cell sector. Macro-diversity techniques use multiple receive antennas, where the antennas are located in different cells or cell sectors. These cells can belong to the same base station, or to different base stations. In UTRA terminology, the former is called softer handover, and the latter soft handover. In general, the proposed technique could be applied in either case, provided the received signals are available at a common receiver unit. In UTRA, it could be applied in conjunction with softer handover, where the received signals are available at Node B site.

- Use of antenna sub-arrays in diversity constellations (e.g. a four-antenna constellation using two sub-arrays in diversity constellation, each sub-array consisting of two elements with half a wavelength spacing) can be useful, since in uplink a spatial diversity gain is obtained in addition to the antenna gain. Basically, there are two possibilities to perform the antenna combining in uplink:

  - Computing is performed in the same manner with all the antennas, e.g. using channel estimation-based combining. In this case, the proposed iterative combining technique can be applied as discussed above, see Fig. 1.
  - Antenna combining can be realized in two stages. In the first stage, the receive signals of the same sub-array are combined. In the second stage, the output signals of the sub-arrays are combined. Different combining algorithms are used in stage one and stage two, for example, direction of arrival (DOA)-based combining in stage one and channel estimation-based combining in stage two. The proposed iterative combining technique can be applied, if one of the stages performs channel estimation-based combining. Typically, channel estimation-based combining would be performed (at least) in stage two, in order to achieve a diversity gain. The iterative combining technique would then have a structure as illustrated in Fig. 3. Comparison with Fig. 1 shows that the $N$ sub-arrays can be considered as equivalent antennas, where we assume $M = N M_s$, $M_s$ denoting the number of elements per sub-array.

Fig. 3 shows an example of an application of iterative combining in conjunction with N antenna sub-arrays.

Fig 3 is distinguished from Fig. 1 in that instead of single antenna elements a plurality of antenna arrays SA1 to SAN is present. The channel estimators have here the reference numerals 37-1 to 37-N.

Each antenna array delivers one output signal, which in one embodiment is obtained using phase information derived from the direction of arrival (DOA) of the received signals. It is known to the expert, that e.g. a Butler matrix can be used for preparing a direction-dependent output signal. This may be regarded as a first stage of a combining process for the signals received by the antenna elements of the arrays.. Combining of the received signals is performed in two stages, where the combining in the second stage is based on iterative channel estimation- as described further above,

The combining lin the first stage, can be implemented, e.g using blind channel estimation instead of being DOA based and using e.g. the just mentioned Butler matrix.

Summary

A multiple antenna receiver structure called iterative combining is presented. The proposed technique combines iterative channel estimation with multiple antenna combining, such that the combining of the antenna signals is performed repeatedly (at least twice), thereby using the previously updated channel estimates. This fundamental receiver structure can be applied with any transmit format, e.g., TDMA or CDMA, and with any receive antenna constellation, e.g., antenna arrays or diversity antennas. Compared with a conventional receiver, the compuational complexity required for demodulation and decoding is approximately doubled. General implementation aspects are discussed and dedicated system examples are presented.

References

[1] ] K. Kopsa, R. Weinmann, V. Braun, and M. Tangemann, "Space-Time Combining in the Uplink of UTRA/FDD," 2000 IEEE Global Communications Conference Globecom'00, pp. 1844-1848, vol. 3, Dec. 2000.

[2] N. Nefedov und M. Pukkila, "Iterative Channel Estimation for GPRS," Proc. PIMRC 2000, Sept. 2000. See also U.S. Patent Application 2001/0004390 A1, June 2001

Claims

1. A method of processing radio signals received via multiple antennas in a radio receiver having at least one of the following: at least two antennas, each antenna delivering in use an antenna signal; at least two elements of an antenna array, each antenna element delivering an antenna signal; at least two antenna arrays each having a plurality of antenna elements, each antenna array delivering an antenna signal;
   the antenna signals being combined to deliver a combined signal,
   wherein for each antenna signal an iterative channel estimation is performed to control the combining process of the antenna signals.

2. A method according to claim 1, wherein feedback information from a point located after the combiner is looped back for being processed in the iterative channel estimations.

3. A method according to claim 1, an antenna array with antenna elements being provided,
   the antenna elements being grouped into sub-arrays, the received signals from the sub-arrays being combined,
   wherein for each sub-array an iterative channel estimation is performed.

4. A method according to claim 1, an antenna array with antenna elements being provided,
   the antenna elements being grouped into sub-arrays, the received signals from the antenna elements being combined,
   wherein for each received signal an iterative channel estimation is performed.

5. A radio receiver having at least one of the following: having at least two antennas, each antenna delivering in use an antenna signal; and/or having at least two elements of an antenna array, each antenna element delivering an antenna signal; and/or having at least two antenna arrays each having a plurality of antenna elements, each antenna array delivering an antenna signal; the radio receiver further having at least one signal combining module (15; 25; 35) combining the antenna signals and to deliver a combined signal, the radio receiver also having at least one channel estimation module (17-1 - 17-M; 27-1 - 27-M; 37-1 - 37-N) performing for each antenna signal an iterative channel estimation for controlling the combining process of the antenna signals.

6. A radio receiver according to claim 5, the radio receiver having an antenna array with antenna elements, the antenna elements being grouped into sub-arrays.

7. A radio receiver according to claim 5, the receiver receiving from each antenna a signal comprising a plurality of "fingers", the receiver comprising for each antenna signal a plurality of channel estimators (27-1 - 27-M), and a spatio-temporal combiner (25) for combining said signals, the combiner being controlled with the output signals of all channel estimators.

8. A radio base station comprising a radio receiver having at least one of the following: having at least two antennas, each antenna delivering in use an antenna signal; and/or having at least two elements of an antenna array, each antenna element delivering an antenna signal; and/or having at least two antenna arrays each having a plurality of antenna elements, each antenna array delivering an antenna signal; the radio receiver further having at least one signal combining module (15; 25; 35) combining the antenna signals and to deliver a combined signal, the radio receiver also having at least one channel estimation module (17-1 - 17-M; 27-1 - 27-M; 37-1 - 37-N) performing for each antenna signal an iterative channel estimation for controlling the combining process of the antenna signals.

9. A mobile communications system comprising a base station with a radio receiver having at least one of the following: having at least two antennas, each antenna delivering in use an antenna signal; and/or having at least two elements of an antenna array, each antenna element delivering an antenna signal; and/or having at least two antenna arrays each having a plurality of antenna elements, each antenna array delivering an antenna signal; the radio receiver further having at least one signal combining module (15; 25; 35) combining the antenna signals and to deliver a combined signal, the radio receiver also having at least one channel estimation module (17-1 - 17-M; 27-1 - 27-M; 37-1 - 37-N) performing for each antenna signal an iterative channel estimation for controlling the combining process of the antenna signals.

**Fig. 1**

**Fig. 2**

**Fig. 3**

**Fig. 4**

**Fig. 5**

European Patent
Office

**EUROPEAN SEARCH REPORT**

Application Number

EP 02 36 0186

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 20860 A (FRANCE TELECOM) 22 March 2001 (2001-03-22) | 1,2,5,8, 9 | H04B7/08 H04L25/02 |
| Y | * figures 2,5 * * page 3, line 10 - line 22 * * page 11, line 15 - line 21 * * page 15, line 20 - line 26 * --- | 3,4,6,7 | |
| Y | US 5 675 343 A (CHAMPEAU ANDRE) 7 October 1997 (1997-10-07) * figure 3 * * column 1 - column 2 * --- | 3,6 | |
| Y | WO 02 09231 A (WESTERN MULTIPLEX CORP) 31 January 2002 (2002-01-31) * page 3; figures 1,2 * --- | 4 | |
| Y | SIALA M ET AL: "ITERATIVE RAKE RECEIVER WITH MAP CHANNEL ESTIMATION FOR DS-CDMA SYSTEMS" ANNALES DES TELECOMMUNICATIONS - ANNALS OF TELECOMMUNICATIONS, PRESSES POLYTECHNIQUES ET UNIVERSITAIRES ROMANDES, LAUSANNE, CH, vol. 54, no. 3/4, March 1999 (1999-03), pages 243-254, XP000834647 ISSN: 0003-4347 * abstract; figure 1 * --- | 7 | TECHNICAL FIELDS SEARCHED (Int.Cl.7) H04B H04L H01Q |
| A | FR 2 814 011 A (FRANCE TELECOM) 15 March 2002 (2002-03-15) * figure 2 * * page 1 - page 2 * * page 6 - page 7 * * page 15 * ----- | 1-9 | |

The present search report has been drawn up for all claims

| Place of search | Date of completion of the search | Examiner |
|---|---|---|
| MUNICH | 6 December 2002 | Cabañas Prieto, A.M. |

EPO FORM 1503 03.82 (P04C01)

**ANNEX TO THE EUROPEAN SEARCH REPORT
ON EUROPEAN PATENT APPLICATION NO.**                EP 02 36 0186

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2002

| Patent document cited in search report | | Publication date | Patent family member(s) | | Publication date |
|---|---|---|---|---|---|
| WO 0120860 | A | 22-03-2001 | FR | 2798542 A1 | 16-03-2001 |
| | | | AU | 7427900 A | 17-04-2001 |
| | | | EP | 1212872 A1 | 12-06-2002 |
| | | | WO | 0120860 A1 | 22-03-2001 |
| US 5675343 | A | 07-10-1997 | FR | 2712121 A1 | 12-05-1995 |
| | | | CA | 2134055 A1 | 03-05-1995 |
| | | | DE | 69410059 D1 | 10-06-1998 |
| | | | DE | 69410059 T2 | 03-09-1998 |
| | | | EP | 0651461 A1 | 03-05-1995 |
| | | | ES | 2115179 T3 | 16-06-1998 |
| | | | JP | 7273530 A | 20-10-1995 |
| WO 0209231 | A | 31-01-2002 | US | 6486828 B1 | 26-11-2002 |
| | | | AU | 8135701 A | 05-02-2002 |
| | | | WO | 0209231 A2 | 31-01-2002 |
| FR 2814011 | A | 15-03-2002 | FR | 2814011 A1 | 15-03-2002 |
| | | | WO | 0223841 A1 | 21-03-2002 |

EPO FORM P0459

For more details about this annex : see Official Journal of the European Patent Office, No. 12/82